# EUROPÄISCHE PATENTSCHRIFT

(11) **EP 0 678 370 B1**
(45) Veröffentlichungstag und Bekanntmachung des Hinweises auf die Patenterteilung: **17.03.1999**
(21) Anmeldenummer: 95105336.2
(22) Anmeldetag: 08.04.1995
(51) Int. Cl.: B29C 45/17

(54) **Verfahren zur Serienherstellung von Artikeln im Gasformverfahren sowie Vorrichtung zur Durchführung des Verfahrens**
Method for batch manufacturing of articles by gas-assisted moulding and apparatus for carrying out the method
Procédé de fabrication en série d'articles par le procédé à injection de gaz et dispositif pour la mise en oeuvre du procédé

(30) Priorität: 21.04.1994 CH 1236/94
(43) Veröffentlichungstag der Anmeldung: 25.10.1995
(73) Patentinhaber: Schoeller-Plast S.A., 1680 Romont (CH)
(72) Erfinder: Umiker, Hans, CH-8132 Egg (CH)
(74) Vertreter: EGLI-EUROPEAN PATENT ATTORNEYS

(56) Entgegenhaltungen:
- EP-A- 0 393 315
- EP-A- 0 402 730
- DE-A- 4 014 963
- DE-A- 4 033 298
- DE-A- 4 240 017
- FR-A- 1 145 441
- PATENT ABSTRACTS OF JAPAN vol. 17 no. 552 (M-1491) ,5.Oktober 1993 & JP-A-05 154862 (HONDA MOTOR) 22.Juni 1993,

## Beschreibung

Die Erfindung betrifft ein Verfahren gemäss dem Oberbegriff des Anspruchs 1 sowie eine Vorrichtung zu seiner Durchführung.

Verfahren dieser Art - sogenannte Gasformverfahren - werden dazu verwendet, im Spritzgiessverfahren Artikel, insbesondere Kunststoffartikel herzustellen, welche mindestens einzelne Stellen grösseren Querschnitts wie Verstärkungsrippen, Griffe u. dgl. aufweisen. Dabei werden diese Stellen nicht massiv gespritzt, sondern durch Einleiten von Druckgas während des Spritzvorgangs, gewöhnlich unmittelbar nach dem Füllen der Form mit Spritzgussmasse, hohl ausgebildet. Dadurch wird neben Material- und Gewichtsersparnis auch eine raschere Abkühlung und damit eine Verkürzung der Zykluszeit erreicht. Ausserdem kann das beim Spritzen massiver Teile oft auftretende Problem der Schwindung entschärft werden. Durch das Einleiten von Gas wird ein Teil der Spritzgussmasse verdrängt, welche in irgendeiner Weise aus dem von der Form umschlossenen Hohlraum abgeleitet werden muss. Es ist bekannt, zur Aufnahme der verdrängten Masse in der Nähe einer Stelle des Hohlraums, an welcher zur Herstellung einer Hohlstelle im Artikel Gas eingeleitet wird, ein Auffangvolumen in der Form vorzusehen, das dort mit dem Hohlraum verbunden ist und das die vom Gas verdrängte Spritzgussmasse aufnimmt. Dies hat den Nachteil, dass die in das Auffangvolumen abgeleitete Masse nach dem Entformen ein unerwünschtes Anhängsel des Artikels bildet, das in einem zusätzlichen Arbeitsgang entfernt werden muss, wobei oft auch eine Glättung des Artikels an der Ansatzstelle des besagten Anhängsels erforderlich ist. Noch gravierender ist jedoch, dass eine Wiederverwertung der verdrängten Spritzgussmasse nur durch Zerkleinern und Wiedereinschmelzen des abgenommenen Anhängsels möglich ist, was weitere, z. T. recht aufwendige Arbeitsgänge notwendig macht und darüberhinaus oft die Qualität des Materials ungünstig beeinflusst.

Aus JP-A-05 154 862 (D1) und EP-A-0 402 730 (D2) sind Spritzgiessverfahren zur Herstellung eines Artikels mit einem Hohlraum bekannt. Eine Einspritzdüse ist - in (D1) an einem Ende, in (D2) in Zentrumsnähe des herzustellenden Artikels - in einer Spritzgussform mit unveränderlichem Volumen angeordnet. Eine Gaseinlassdüse ist am anderen Ende (D1) bzw. an einem Ende (D2) der Form angeordnet. Nach dem vollständigen Füllen der Form mit Harz durch eine Spritzgussmaschine, wird ein Gas über die Gaseinlassdüse in die Form gepresst: Dadurch wird ein Teil des noch geschmolzenen Harzes über die Einspritzdüse für die Spritzgussmasse zurück in die Einspritzleitung und weiter in ein Auffanggefäss gedrückt. Während (D1) ein separates Auffanggefäss bereitstellt, das mit dem Einspritzkanal in direkter Verbindung steht, verwendet (D2) den vorderen Teil des Einspritzkanals als Auffanggefäss. Das im Auffanggefäss gesammelte Harz wird beim nächsten Spritzgiessprozess vor dem von der Spritzgussmaschine gelieferten Harz über die Einspritzleitung und die Einspritzdüse in die Kavität der Form gepresst. Das in (D1) offenbarte Verfahren eignet sich wohl für Artikel, welche einen - im Verhältnis zu deren Gesamtvolumen - grossen, zusammenhängenden Hohlraum aufweisen; wobei keine, sich über weite Bereiche der Form ausdehnenden und die Hohlräume voneinander trennenden, dünnen Bereiche auftreten dürfen. Solche ausgedehnten, dünnen Bereiche ohne Hohlräume würden nämlich das Zurückdrängen der Spritzgussmasse durch das rasche Abkühlen derselben zumindest behindern oder gar verunmöglichen; oder aber der Spritzgiessvorgang müsste durch ein Heizen der Form so verlangsamt werden, dass sich der gewünschte Hohlraum ungehindert ausbilden kann. Für die Gewährleistung eines ungestörten Abfliessens des Überlaufs in einer Anordnung gemäss (D1) oder (D2) muss der Angusskanal mit relativ grossem Querschnitt dimensioniert werden, damit es auch hier nicht zu einem Stau infolge des Erkaltens der Spritzgussmasse kommen kann. Die beschriebenen Verfahren sind somit auf die Anwendung für bestimmte Formen beschränkt und/oder benötigen lange Zykluszeiten. Zudem haben sie zur Folge, dass in mehr oder weniger aufwendiger Nachbearbeitung des Artikels nach dem Entformen ein unerwünschtes Anhängsel, der Anguss (vgl. z.B. D2, Fig. 3) vom Formteil abgetrennt werden muss.

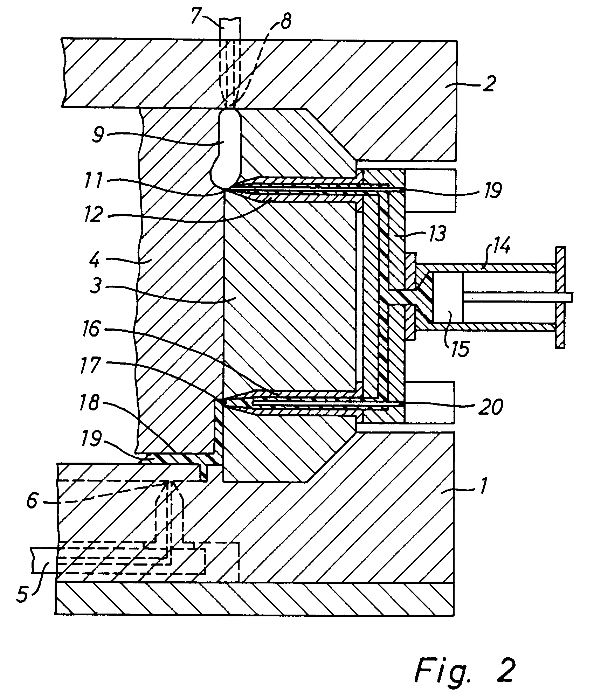

Ferner ist aus DE 40 11 310 ein gattungsgemässes Gasformverfahren zur Herstellung von Hohlkörpern mit komplizierter geometrischer Form bekannt, bei dem zunächst der gesamte Hohlraum der Gussform mit Kunststoff vollgespritzt wird. Nach dem Erstarren eines Teils des eingespritzten Kunststoffes wird im Bereich der Gussformwandung ein Druckgas eingeführt, das den verbleibenden flüssigen Kunststoff - unter Bildung des gewünschten Hohlraumes des Hohlkörpers - in einen hierfür vorgesehenen Raum verdrängt. An beiden Enden eines so hergestellten Hohlkörpers befinden sich, beim Ausstossen desselben aus der Gussform, Anhängsel in Form eines Angusses bzw. Überschusses (vgl. Fig. 2), welche durch anschliessendes Nacharbeiten entfernt werden.

Hier soll die Erfindung Abhilfe schaffen, insbesondere soll ein Verfahren bzw. eine Vorrichtung vorgeschlagen werden, bei welcher der Ueberlauf nicht mehrmals hin- und hergepumpt wird. Die Erfindung, wie sie in den Ansprüchen gekennzeichnet ist, schafft ein Verfahren, bei welchem unerwünschte Anhängsel am Artikel gar nicht erst entstehen und kurze Zykluszeiten ermöglicht werden. Der Artikel benötigt daher nach dem Entformen keine spezifische Nachbearbeitung. Das verdrängte Material wird ohne Verlust und ohne aufwendige Zwischenbearbeitung wiederverwertet und erleidet keine Qualitätseinbusse. Im Ganzen wird die Herstellung von Artikeln im Gasformverfahren wesentlich vereinfacht und verbilligt.

Im folgenden wird die Erfindung anhand von nur ein Ausführungsbeispiel darstellenden Figuren näher erläutert. Es zeigen:
- Fig. 1: einen Teilschnitt durch die Mittelebene einer erfindungsgemässen Vorrichtung während einer Phase der Herstellung eines Artikels durch das erfindungsgemässe Verfahren und
- Fig. 2: einen Teilschnitt entsprechend Fig. 1 während einer früheren Phase der Herstellung eines nächsten Artikels durch das erfindungsgemässe Verfahren.

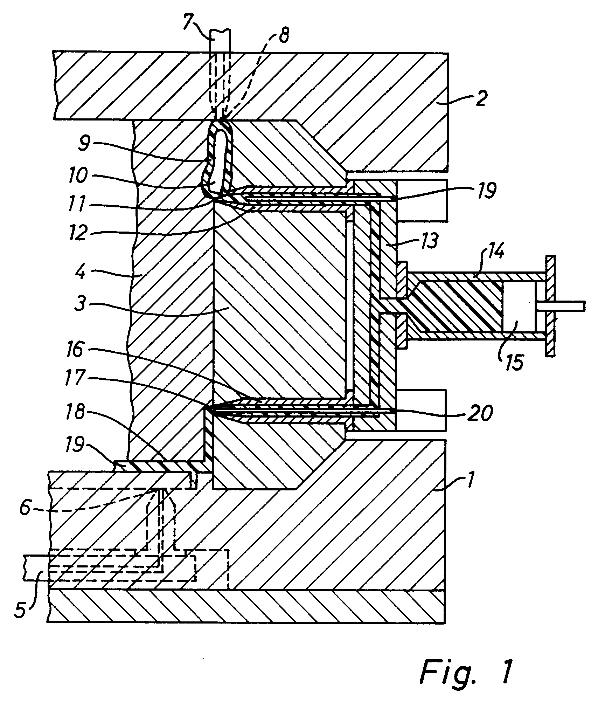

Die in den Figuren dargestellte Vorrichtung umfasst eine Form zur Herstellung eines viereckigen Flaschenkastens. Die Form weist eine erste Grundplatte 1 auf, eine zweite Grundplatte 2 sowie Backen 3 (nur einer dargestellt) und einen aus mehreren Teilen bestehenden Kern 4 (nur teilweise dargestellt), welche aus Metall bestehen und einen Hohlraum umschliessen, dessen Form der des herzustellenden Flaschenkastens entspricht. Den Figuren ist ein Schnitt durch einen Teil der Form, in welchem eine Seitenwand - der eine entsprechende weitere Seitenwand gegenüberliegt - und ein Teil des Bodens entstehen, zu entnehmen. Durch die erste Grundplatte 1 sind Heissleiter 5 geführt, die einen Vorratsbehälter (nicht dargestellt) mit Einspritzöffnungen 6 (nur eine dargestellt) verbinden, welche an den unteren Ecken in den Hohlraum münden. Durch die zweite Grundplatte 2 sind in ähnlicher Weise Gasleitungen 7 (ebenfalls nur eine dargestellt) geführt, welche einen Druckgasbehälter über ein schaltbares Ventil (beide nicht dargestellt) mit Gaszufuhröffnungen 8 (nur eine dargestellt) verbinden, welche an den oberen Ecken des Hohlraums, d. h. an den Enden von zwei Holmteilen 9 (nur einer sichtbar) des Hohlraums angeordnet sind, in welchem sich bei der Herstellung des Flaschenkastens hohle Holme 10 (Fig. 1, nur einer sichtbar) bilden, die als Handgriffe dienen und verhältnismässig grossen Querschnitt aufweisen.

In der Mitte des Holmteils 9 ist jeweils an der Unterseite eine Ableitöffnung 11 angeordnet, welche über eine heizbare Ableitung 12 mit einem Sammelheissleiter 13 verbunden ist, von welchem mittig eine kurze Leitung zu einem gleichfalls heizbaren Zylinder 14 abzweigt, welcher zusammen mit einem in demselben verschiebbaren Kolben 15 eine Kolbenpumpe bildet, welche elektrisch oder hydraulisch betätigbar ist. Am unteren Ende des Sammelheissleiters 13 zweigt eine heizbare Rückleitung 16 ab, welche in einer Rückführöffnung 17 in einem Bodenteil 18 des Hohlraums, in welchem sich ein Boden 19 des Flaschenkastens bildet, endet. Die Ableitung 12 und die Rückleitung 16 sind als Nadelventile ausgebildet, so dass die Ableitöffnung 11 und die Rückführöffnung 17 durch pneumatisch betätigbare Nadeln 19 bzw. 20 verschliessbar sind.

Zur Herstellung eines Flaschenkastens wird in den von der geschlossenen Form umschlossenen Hohlraum bei jeweils geschlossener Ableitöffnung 11 und Rückführöffnung 17 durch die Einspritzöffnungen 6 als Spritzgussmasse geschmolzener Kunststoff eingespritzt, bis der Hohlraum vollständig gefüllt ist. Unmittelbar anschliessend wird jeweils die Nadel 19 zurückgezogen und dadurch die Ableitöffnung 11 geöffnet und gleichzeitig durch die Gaszufuhröffnungen 8 Druckgas, gewöhnlich Stickstoff, in den Holmteil 9 des Hohlraums eingeleitet, wodurch unter Verdrängung eines Ueberlaufs, welcher durch die Ableitöffnung 11 über die Ableitung 12 und den Sammelheissleiter 13 in den Zylinder 14, der als Auffangvolumen dient, abgeleitet wird, eine Hohlstelle im Holm 10 erzeugt wird, die sich über dessen ganze Länge erstreckt. Der Kolben 15 wird dabei zurückgezogen. Dieses Stadium ist in Fig. 1 dargestellt. Anschliessend wird die Ableitöffnung 11 wieder verschlossen.

Nach einer Abkühlzeit, in der sich die Spritzgussmasse im Hohlraum verfestigt, während sie in der Ableitung 12, dem Sammelheissleiter 13, der Rückleitung 16 und vor allem im Zylinder 14 jeweils beheizt und damit im plastischen Zustand gehalten wird, wird die Form geöffnet und der Flaschenkasten ausgestossen. Anschliessend wird die Form wieder geschlossen.

Bevor nun der Hohlraum zur Herstellung eines weiteren Flaschenkastens durch die Einspritzöffnungen 6 wiederum gefüllt wird, wird durch Zurückziehen der Nadel 20 die Rückführöffnung 17 geöffnet und durch Vorschieben des Kolbens 15 die im Zylinder 14 aufgefangene Spritzgussmasse über den Sammelheissleiter 13 und die Rückleitung 16 in den Bodenteil 18 des Hohlraums eingespritzt oder eingeleitet (Fig. 2). Anschliessend wird durch Vorschieben der Nadel 20 die Rückführöffnung 17 verschlossen und ein weiterer Zyklus mit Einspritzen weiterer Spritzgussmasse durch die Einspritzöffnungen 6 begonnen.

Der zeitliche Ablauf des Verfahrens könnte auch anders gewählt werden, z. B. kann die Rückführung des Ueberlaufs durch die Rückführöffnung 17 jeweils gleichzeitig mit der Einspritzung durch die Einspritzöffnungen 6 erfolgen. Eine vorgängige Einleitung hat jedoch den Vorteil, dass der Kolben 15 keinen hohen Druck zu erzeugen braucht. Das Gleiche gilt gegenüber einer Rückführung in einen der zu den Einspritzöffnungen 6 führenden Heissleiter 5, die in den meisten Fällen auch die Konstruktion der Form komplizieren würde. Vor allem bei einfachen Formen, bei denen dies ohne grossen konstruktiven Aufwand möglich ist, kann eine derartige Rückführung in die Zuleitung zu einer Einspritzöffnung trotzdem eine brauchbare Lösung darstellen.

Das erfindungsgemässe Verfahren kann in erfindungsgemässen Vorrichtungen mit entsprechend abgewandelter Form natürlich auch zur Herstellung anderer Artikel eingesetzt werden, z. B. von Eimern und anderen Behältern.

## Patentansprüche

1. Verfahren zur Serienherstellung von Artikeln im Gasformverfahren in aufeinanderfolgenden Spritzgiessdurchgängen, bei welchem jeweils ein in einer geschlossenen Form gebildeter Hohlraum mit durch mindestens eine Einspritzöffnung (6) in dieselbe eingespritzter Spritzgussmasse gefüllt wird, anschliessend an mindestens einer Stelle Gas in die Form eingeleitet, dadurch eine Hohlstelle (10) in der Spritzgussmasse erzeugt und ein Ueberlauf aus dem Hohlraum verdrängt wird, und schliesslich die Form geöffnet, der Artikel ausgestossen und die Form wieder geschlossen wird, wobei der bei einem Spritzgiessdurchgang abgeleitete Ueberlauf jeweils in fliessfähigem Zustand gehalten und während eines späteren Spritzgiessdurchgangs wieder in den Hohlraum - jeweils von der mindestens einen Einspritzöffnung (6) getrennt - eingespritzt wird, **dadurch gekennzeichnet, dass** der Hohlraum für den herzustellenden Artikel direkt an der Oberfläche des Artikels abgesperrt und der bei einem Spritzgiessdurchgang abgeleitete Ueberlauf jeweils von der Stelle (11) oder den Stellen, an welcher der Ueberlauf abgeleitet wird, entfernt eingespritzt wird.

2. Verfahren nach Anspruch 1, **dadurch gekennzeichnet, dass** der bei einem Spritzgiessdurchgang abgeleitete Ueberlauf jeweils während des unmittelbar auf denselben folgenden Spritzgiessdurchgangs eingespritzt wird.

3. Verfahren nach Anspruch 1 oder 2, **dadurch gekennzeichnet, dass** der bei einem Spritzgiessdurchgang abgeleitete Ueberlauf jeweils vor dem Einspritzen von Spritzgussmasse durch die mindestens eine Einspritzöffnung (6) oder zu Beginn desselben eingespritzt wird.

4. Vorrichtung zur Durchführung des Verfahrens nach einem der Ansprüche 1 bis 3, welche eine Form umfasst, die in einem geschlossenen Zustand einen Hohlraum umschliesst, mit mindestens einer Einspritzöffnung (6), einer Gaszufuhröffnung (8), einer Ableitöffnung (11) und einem Auffangvolumen, wobei jede Ableitöffnung (11) mit einem Auffangvolumen verbunden ist und die Vorrichtung mindestens eine Pumpeinrichtung zur Entleerung des mindestens einen Auffangvolumens in den Hohlraum - der mindestens eine Rückführöffnung (17) aufweist, welche mit mindestens einem Auffangvolumen verbunden ist - umfasst, **dadurch gekennzeichnet, dass** die Verbindung zwischen der mindestens einen Ableitöffnung (11) und dem entsprechenden Auffangvolumen direkt an den Hohlraum anschliessend sperrbar und die mindestens eine Rückführöffnung (17) von der mindestens einen Ableitöffnung (11) beabstandet ist.

5. Vorrichtung nach Anspruch 4, **dadurch gekennzeichnet, dass** die Verbindung zwischen der mindestens einen Rückführöffnung (17) und dem mindestens einen Auffangvolumen sperrbar ist.

6. Vorrichtung nach einem der Ansprüche 4 bis 5, **dadurch gekennzeichnet, dass** die Pumpeinrichtung als Kolbenpumpe ausgebildet ist, welche das Auffangvolumen umschliesst.

7. Vorrichtung nach einem der Ansprüche 4 bis 6, **dadurch gekennzeichnet, dass** das Auffangvolumen heizbar ist.

8. Vorrichtung nach einem der Ansprüche 4 bis 7, **dadurch gekennzeichnet, dass** Verbindungen zwischen der mindestens einen Ableitöffnung (11) und der mindestens einen Rückführöffnung (17) einerseits und dem mindestens einen Auffangvolumen andererseits jeweils heizbar sind.

## Claims

1. Method for batch manufacturing articles by gas-assisted moulding in successive injection-moulding operations, in which method a cavity formed in a closed mould is respectively filled with injection-moulding compound injected through at least one gate (6) into the latter, gas is subsequently introduced into the mould at at least one point, thereby producing a hollow (10) in the injection-moulded compound and displacing an overflow out of the cavity, and finally the mould is opened, the article is ejected and the mould is closed again, the overflow drained off in an injection-moulding operation being in each case kept in a free-flowing state and injected again, during a later injection-moulding operation, into the cavity - in each case away from the at least one gate (6) -, characterized in that the cavity for the article to be manufactured is shut off directly at the surface of the article and the overflow drained off in an injection-moulding operation is in each case injected at a place remote from the point (11) or points at which the overflow is drained off.

2. Method according to Claim 1, characterized in that the overflow drained off in one injection-moulding operation is in each case injected during the injection-moulding operation immediately following thereafter.

3. Method according to Claim 1 or 2, characterized in that the overflow drained off in one injection-moulding operation is in each case injected before the injection of injection-moulding compound through the at least one gate (6) or the beginning thereof.

4. Apparatus for carrying out the method according to one of Claims 1 to 3, which comprises a mould which, in a closed state, encloses a cavity, having at least one gate (6), at least one gas-feeding opening (8), at least one draining-off opening (11) and at least one collecting volume, each draining-off opening (11) being connected to a collecting volume and the apparatus comprising at least one pumping device for emptying the at least one collecting volume into the cavity - which has at least one return opening (17) which is connected to at least one collecting volume -, characterized in that the connection between the at least one draining-off opening (11) and the corresponding collecting volume can be shut off directly after the cavity, and the at least one return opening (17) is at a distance from the at least one draining-off opening (11).

5. Apparatus according to Claim 4, characterized in that the connection between the at least one return opening (17) and the at least one collecting volume can be shut off.

6. Apparatus according to one of Claims 4 or 5, characterized in that the pumping device is designed as a piston pump which encloses the collecting volume.

7. Apparatus according to one of Claims 4 to 6, characterized in that the collecting volume is heatable.

8. Apparatus according to one of Claims 4 to 7, characterized in that connections between the at least one draining-off opening (11) and the at least one return opening (17) on the one hand and the at least one collecting volume on the other hand are in each case heatable.

## Revendications

1. Procédé pour la fabrication d'articles en série dans le procédé de moulage à l'aide d'un gaz, en les faisant passer par des moulages par transfert successifs, dans lequel respectivement on remplit un espace creux formé dans un moule fermé avec une matière de moulage par injection injectée à travers au moins une ouverture d'injection (6) pratiquée dans l'espace creux; ensuite, on introduit du gaz dans le moule à au moins un endroit, si bien que l'on obtient un vide (10) dans la matière de moulage par injection et un trop-plein est repoussé hors de l'espace creux; et enfin, on ouvre le moule, on éjecte l'article et on referme le moule, dans lequel le trop-plein dévié lors d'une opération de moulage par transfert est respectivement maintenu à l'état apte à s'écouler et est réinjecté dans l'espace creux au cours d'une opération ultérieure de moulage par transfert - respectivement à l'écart de la ou desdites ouvertures d'injection (6) - caractérisé en ce que l'espace creux pour l'article à fabriquer est obturé directement contre la surface de l'article et le trop-plein dévié au cours d'une opération de moulage par transfert est injecté respectivement à l'écart de l'endroit (11) ou des endroits à partir duquel ou desquels le trop-plein est dévié.

2. Procédé selon la revendication 1, caractérisé en ce que le trop-plein dévié lors d'une opération de moulage par transfert est respectivement injecté au cours de l'opération de moulage par transfert qui suit immédiatement la première citée.

3. Procédé selon la revendication 1 ou 2, caractérisé en ce que le trop-plein dévié lors d'une opération de moulage par transfert est injecté respectivement avant l'injection de la matière de moulage par injection via la ou les ouvertures d'injection (6) ou au début de cette injection.

4. Dispositif pour la mise en oeuvre du procédé selon l'une quelconque des revendications 1 à 3, qui comprend un moule qui renferme un espace creux à l'état fermé, comprenant au moins une ouverture d'injection (6), une ouverture d'alimentation de gaz (8), une ouverture de déviation (11) et un volume de réception, dans lequel chaque ouverture de déviation (11) est reliée à un volume de réception et le dispositif comprend au moins un mécanisme de pompage pour vider le ou les volumes de réception dans l'espace creux - qui présente au moins une ouverture de recyclage (17) qui est reliée à au moins un volume de réception - caractérisé en ce que la liaison entre la ou les ouvertures de déviation (11) et le volume de réception correspondant peut être obturée de manière directement contigue à l'espace creux et la ou les ouvertures de recyclage (17) est ou sont disposées à l'écart de l'ouverture ou des ouvertures de déviation (11).

5. Dispositif selon la revendication 4, caractérisé en ce que la liaison entre l'ouverture ou les ouvertures de recyclage (17) et le ou les volumes de réception peut être obturée.

6. Dispositif selon l'une quelconque des revendications 4 à 5, caractérisé en ce que le mécanisme de pompage est réalisé sous forme d'une pompe à piston qui renferme le volume de réception.

7. Dispositif selon l'une quelconque des revendications 4 à 6, caractérisé en ce que le volume de réception peut être chauffé.

8. Dispositif selon l'une quelconque des revendications 4 à 7, caractérisé en ce que des liaisons entre l'ouverture ou les ouvertures de déviation (11) et l'ouverture ou les ouvertures de recyclage (17) d'une part et le ou les volumes de réception d'autre part peuvent être respectivement chauffés.
